# EUROPEAN PATENT SPECIFICATION

(11) **EP 0 543 177 B1**
(45) Date of publication and mention of the grant of the patent: **28.08.1996**
(21) Application number: 92118212.7
(22) Date of filing: 23.10.1992
(51) Int. Cl.: F15B 15/02, B30B 1/32, B21D 22/22

(54) **Hydraulic actuator**
Hydraulischer Stellantrieb
Vérin hydraulique

(30) Priority: 28.10.1991 JP 335803/91
(43) Date of publication of application: 26.05.1993
(73) Proprietor: Hoshi, Hideo, Nagoya-shi Aichi-ken (JP); Mannesmann Rexroth GmbH, D-97813 Lohr (DE)
(72) Inventor: Hoshi, Hideo, Nagoya-shi, Aichi-ken (JP)
(74) Representative: Liedl, Christine, Dipl.-Chem.

(56) References cited:
- EP-A- 0 125 552
- DE-B- 1 145 125
- FR-A- 2 187 449
- GB-A- 0 928 260

## Description

The present invention relates to a hydraulic actuator according to the preamble of claim 1.

An actuator of this type is known from DE-A-1 145 125.

The object of the present invention is to provide a simple hydraulic actuator in which no eccentric load is produced during the operation. This object is solved by the features of the characterizing part of claim 1.

According to the present invention, there is provided a hydraulic actuator comprising a single cylinder body which defines therein a pressure chamber in which a first piston with a piston rod and a second piston with a piston rod are independently movably inserted, a first working member secured to the first piston rod, a second working member secured to the second piston rod, and pressurized fluid inlet and outlet ports provided in the cylinder body to be connected to the pressure chamber.

The pressure chamber comprises first, second and third separate pressure chambers, so that the first and second pressure chambers are separated by the first piston, and the second and third pressure chambers are separated by the second piston.

Provision is also made for a fluid pipe which extends through the first piston to be connected to the second pressure chamber.

The pressure chamber can be either annular or circular in cross section.

Each of the first and second piston rods is comprised of a plurality of rod elements.

These rod elements can be circumferentially spaced at an equiangular distance.

Below, a detailed explanation will be made of the present invention based on embodiments shown in the attached drawings, in which;
Figure 1 is a longitudinal sectional view of a hydraulic press machine having a cylinder body which defines therein an annular pressure chamber, to which a first embodiment of the present invention is applied;
Figure 2 is a longitudinal sectional view of a hydraulic press machine shown in Fig. 1, shown in a working position;
Figure 3 is a longitudinal sectional view of a hydraulic press machine shown in Fig. 1, shown in a workpiece expelling position;
Figure 4 is a longitudinal sectional view of a hydraulic press machine shown in Fig. 1, shown in a workpiece removing position;
Figure 5 is a cross sectional view taken along the line 5-5 in Fig. 1;
Figure 6 is a plan view of another press die;
Figure 7 is a longitudinal sectional view of a hydraulic press machine having a cylinder body which defines therein a circular pressure chamber, according to a second embodiment of the present invention;
Figure 8 is a longitudinal sectional view of a hydraulic press machine shown in Fig. 7, shown in a working position;
Figure 9 is a longitudinal sectional view of a hydraulic press machine shown in Fig. 7, shown in a workpiece expelling position; and,
Figure 10 is a longitudinal sectional view of a hydraulic press machine shown in Fig. 7, shown in a workpiece removing position.

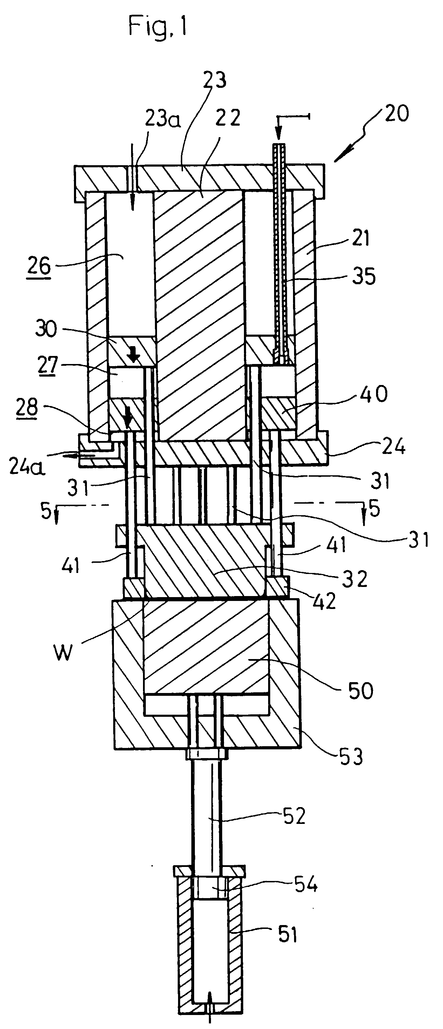

Figures 1 through 6 show a first embodiment of the present invention in which a hydraulic actuator is applied to a hydraulic press machine 20.

The press machine 20 includes a circular cylinder body 21, in which first and second pistons 30 and 40 are inserted. The first piston 30 has a piston rod 31 consisting of a plurality of rod elements concentrically arranged along a first imaginary circle. The piston rod 31 is provided on the front end (lower end) thereof with a punch 32 as a first working member. The first piston 30 is reciprocally moved in the cylinder body 21 in the axial direction thereof by a pressurized oil which is introduced in and discharged from the cylinder body 21 through first and second oil ports 23a and 24a formed in upper and lower end plates 23 and 24 of the cylinder body 21.

The second piston 40 has a piston rod 41 consisting of a plurality of rod elements concentrically arranged along a second imaginary circle larger than the first imaginary circle. The piston rod 41 is provided on the front end (lower end) thereof with a pressure pad (die cushion) 42 as a second working member. The second piston 40 is reciprocally moved in the cylinder body 21 in the axial direction thereof by a pressurized oil which is introduced in and discharged from the cylinder body 21 through an oil passage 35 which extends through the first piston 30 and the second oil port 24a of the end plate 24.

The oil passage 35 movably extends through the upper end plate 23 and is secured to the first piston 30 so as to move together with the first piston 30.

In the first embodiment illustrated in Figs. 1 through 6, the cylinder body 21 is provided with a center column 22, so that first, second and third annular pressure chambers 26, 27 and 28 are defined in the cylinder body 21. The first and second pressure chambers 26 and 27 are separated by the first piston 30, and the second and third pressure chambers 27 and 28 are separated by the second piston 40.

Below the cylinder body 21 is provided a lower knock-out 50 which is slidably inserted in a housing (die) 53 and is connected to a piston rod 52 of a piston 54 which is slidably inserted in a knock-out cylinder (auxiliary hydraulic cylinder) 51.

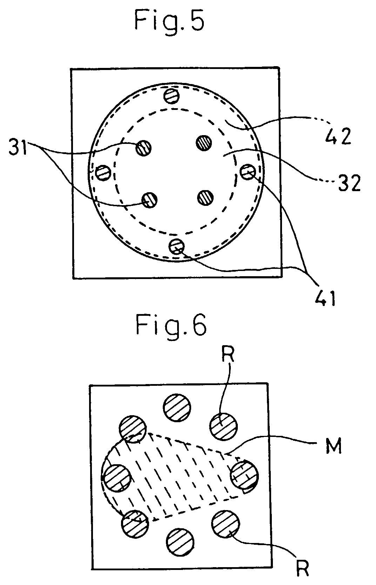

As mentioned above, a plurality of (e.g., four) rod elements of the first piston rod 31 of the first annular piston 30 are surrounded by a plurality of (e.g., four) rod elements of the second piston rod 41 of the second annular piston 40, as can be seen in Fig. 5. In a preferred arrangement, the rod elements R of the first piston rod 31 and/or the rod elements R of the second piston rod 41 are spaced from one another at an equiangular distance, as shown in Fig. 6, so that even an irregular shape of press die M which tends to receive an eccentric load can be substantially uniformly pressed for example at the peripheral edge thereof.

In the illustrated embodiment, the second working member (cushion pad) 42 is annular, so that the first working member (punch) 32 is slidably fitted in the second working member.

The hydraulic actuator as constructed above, according to the present invention operates as follows (particularly see Figs. 1 through 4).

Fig. 1 shows a press contact position in which the second piston 40 is advanced (moved downward in Fig. 1) to bring the cushion pad 42 into press contact with a workpiece W located on the housing 53 and the knock-out 50 whose upper surface is flush with the upper surface of the housing 53 in the initial position.

In the press contact position shown in Fig. 1, a predetermined amount of pressurized fluid (e.g., pressurized oil) is introduced in advance in the second pressure chamber 27 through the oil passage (pipe) 35, and thereafter, a valve (not shown) provided in the oil passage 35 is closed. Thereafter, the pressurized fluid (e.g., pressurized oil) is introduced in the first pressure chamber 26 through the oil port 23a. As a result, both the first and second pistons 30 and 40 are advanced (moved downward in Fig. 1) while maintaining a constant distance between the first and second pistons 30 and 40 owing to the pressurized oil enclosed in the second pressure chamber 27. Namely, the pressurized oil enclosed in the second pressure chamber 27 serves as a rigid connector (fluid connector) to transmit the movement of the first piston 30 to the second piston 40.

The advance of the first and second pistons 30 and 40 causes the pressurized oil in the third pressure chamber 28 to be discharged therefrom through the oil port 24a formed in the lower end plate 24.

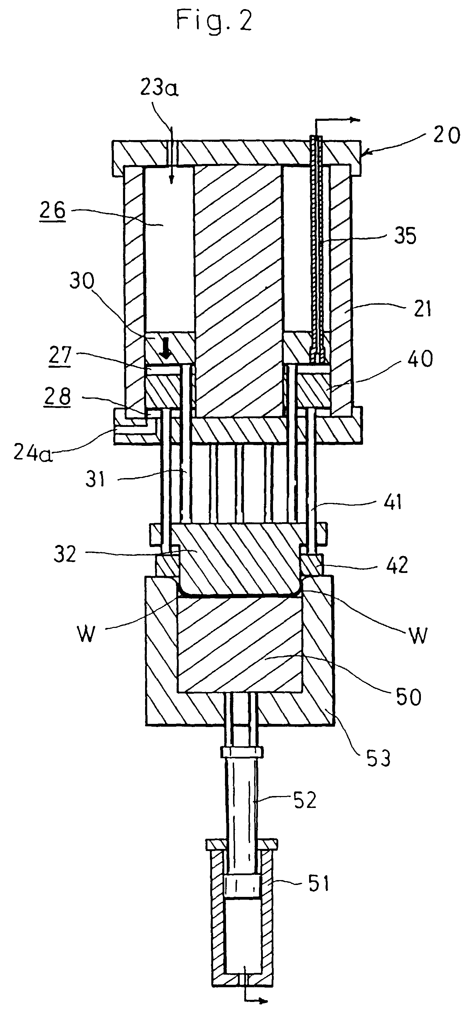

Figure 2 shows a press (working) position in which the punch 32 is protruded by the first piston 30 to press (deform) the workpiece W into a desired shape.

To advance the first piston 30, the pressurized oil is introduced in the first pressure chamber 26 through the oil port 23a and the pressurized oil contained in the second pressure chamber 27 is gradually discharged therefrom through the oil passage (pipe) 35 while retaining a predetermined fluid pressure (i.e., adjustment of back pressure).

The adjustment of the back pressure during the discharge of the oil from the second pressure chamber 27 through the oil passage 35 while adjusting ensures a die cushion effect.

The workpiece W is pressed into a desired shape by the advance of the punch 32 caused by the movement of the first piston 30. To this end, the lower knock-out 50 is retracted (moved downward in Fig. 2).

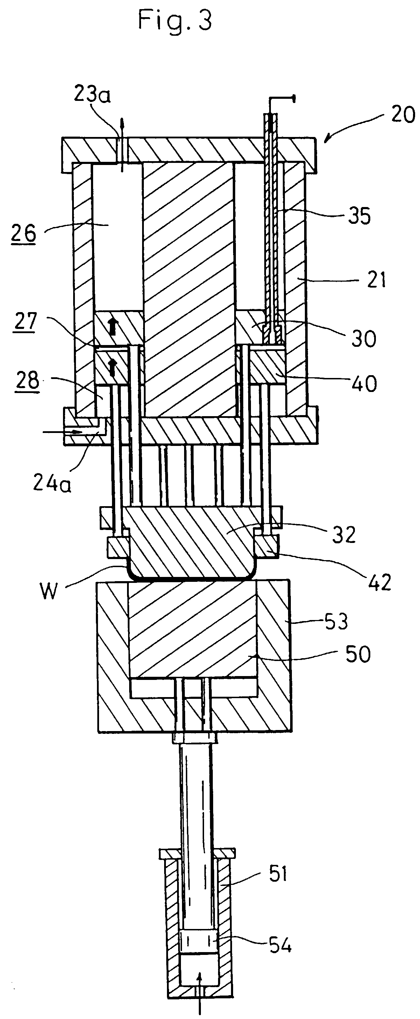

Figure 3 shows a workpiece expelling position in which the valve (not shown) of the oil passage 35 is closed, so that the pressurized oil is enclosed in the second pressure chamber 27 to serve as a rigid connector, as mentioned above, and the pressurized oil is introduced in the third pressure chamber 28 through the oil port 24a to retract the second piston 40 together with the first piston 30. At the same time, the knock-out cylinder 51 is actuated to protrude the knock-out piston 54, and accordingly, the piston rod 52 thereof. Consequently, the pressed workpiece W is expelled by the knock-out 50 from the housing 53.

During the retraction (i.e., upward displacement) of the first piston 30, the pressurized oil in the first chamber 26 is discharged from the oil port 23a.

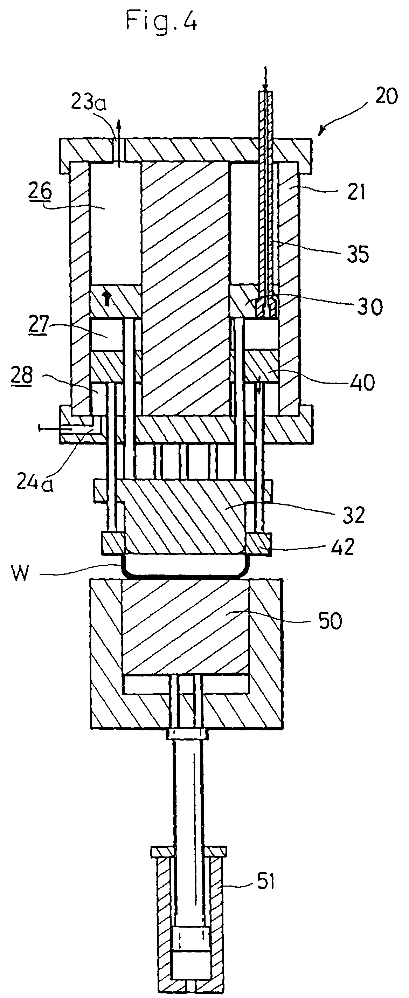

Figure 4 shows a workpiece removing position in which the pressed workpiece W is removed from the punch 32. In Fig. 4, a valve (not shown) provided in an oil passage connected to the third pressure chamber 28 through the oil port 24a is closed, and thereafter, the pressurized oil is introduced in the second pressure chamber 27 through the oil passage 35. As a result, the introduction of the pressurized oil in the second pressure chamber 27 causes only the first piston 30 to move upward in Fig. 4 without moving the second piston 40 since the pressure in the third pressure chamber 28 is kept constant by the closure of the valve.

During the upward movement of the first piston 30, the pressurized oil in the first pressure chamber 26 is discharged therefrom through the oil port 23a.

Consequently, the pressed workpiece W is removed from the punch 32 by the upward movement of the first piston 30.

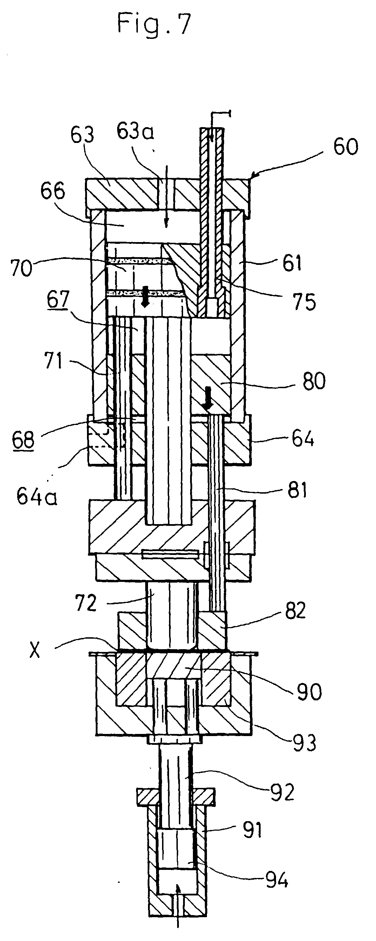

Figures 7 through 10 show a second embodiment of the present invention.

The press machine 60 shown in Figs. 7 through 10 has a cylinder body 61 having therein a circular pressure chamber consisting of first, second and third pressure chambers 66, 67 and 68. The second embodiment illustrated in Figs. 7 through 10 is different from the first embodiment illustrated in Figs. 1 through 6 only in the shape of the pressure chamber which is annular in the first embodiment and circular in the second embodiment, respectively. Namely, the cylinder body 61 has no center column 22 as shown in Figs. 1 through 4.

The operation of the second embodiment is substantially identical to that of the first embodiment. Namely, the first piston 70 has a piston rod 71 secured thereto, which is provided on the front (lower) end thereof with a punch 72 serving as a first working member. The first piston 70 is reciprocally moved in the cylinder body 61 in the axial direction by the pressurized fluid (e.g., pressurized oil) introduced in and discharged from the pressure chamber through the oil ports 63a and 64a formed in the end plates 63 and 64, respectively.

The second piston 80 has a piston rod 81 secured thereto, which is provided, on the front (lower) end thereof with, a pressure pad 82 for die cushion as a second working member. The second piston 80 is reciprocally moved in the cylinder body 61 in the axial direction by the pressurized fluid (e.g., pressurized oil) introduced in and discharged from the second pressure chamber 67 through the oil passage (pipe) 75 which extends through the first piston 70 and the upper end plate 63.

Numeral 90 designates the lower knock-out, 91 the knock-out cylinder, 92 the piston rod, 93 the housing (die), 94 the piston, corresponding to those in the first embodiment shown in Figs. 1 through 4, respectively.

Figure 7 shows the press contact position corresponding to Fig. 1, in which the second piston 80 is advanced (moved downward), so that the cushion pad 82 comes into press contact with the workpiece X. Similarly to Fig. 1, in the press contact position shown in Fig. 7, a predetermined amount of pressurized fluid (e.g., pressurized oil) is introduced in advance in the second pressure chamber 67 through the oil passage (pipe) 75, and thereafter, a valve (not shown) provided in the oil passage 75 is closed. Thereafter, the pressurized fluid (e.g., pressurized oil) is introduced in the first pressure chamber 66 through the oil port 63a. As a result, both the first and second pistons 70 and 80 are advanced (moved downward in Fig. 7).

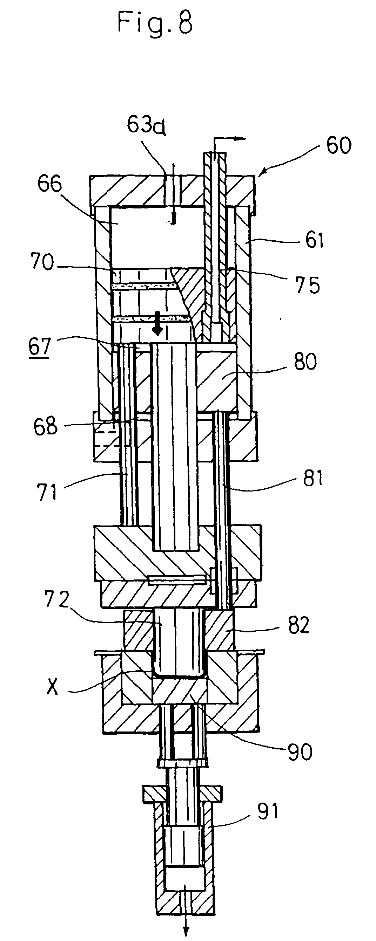

Figure 8 shows a working position corresponding to Fig. 1, in which the punch 82 is protruded by the first piston 70 to press (deform) the workpiece X into a desired shape.

To advance the first piston 70, the pressurized oil is introduced in the first pressure chamber 66 through the oil port 63a and the pressurized oil contained in the second pressure chamber 67 is gradually discharged therefrom through the oil passage (pipe) 75 while retaining a predetermined fluid pressure (i.e., adjustment of back pressure).

Thus, the workpiece X is pressed into a desired shape by the advance of the punch 72 caused by the movement of the first piston 70. To this end, the lower knock-out 90 is retracted (moved downward in Fig. 8).

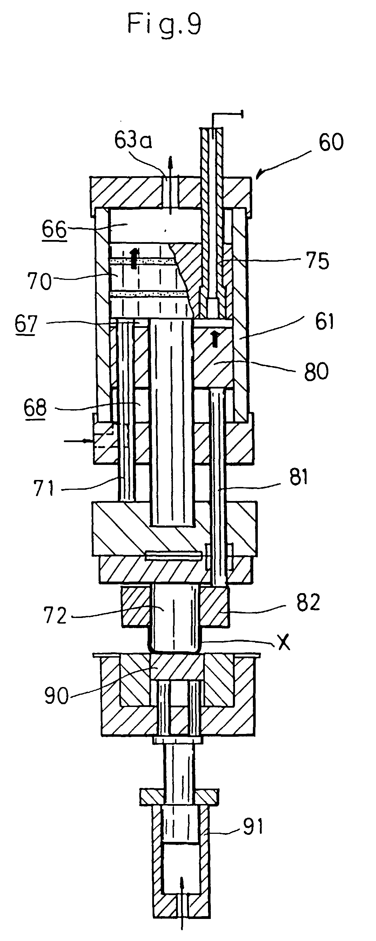

Figure 9 shows a workpiece expelling position corresponding to Fig. 3, in which the valve (not shown) of the oil passage 75 is closed, so that the pressurized oil is enclosed in the second pressure chamber 67 to serve as a rigid connector, as mentioned above, and the pressurized oil is introduced in the third pressure chamber 68 through the oil port 64a to retract the second piston 80 together with the first piston 70. At the same time, the knock-out cylinder 91 is actuated to protrude the knock-out piston 94, and accordingly, the piston rod 92 thereof. Consequently, the pressed workpiece X is expelled by the knock-out 90 from the die 93.

During the retraction (i.e., upward displacement) of the first piston 70, the pressurized oil in the first chamber 66 is discharged from the oil port 63a.

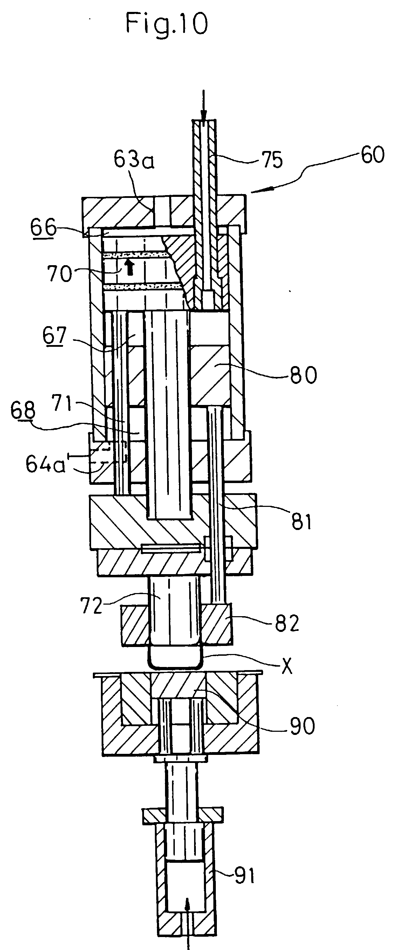

Figure 10 shows a workpiece removing position in which the pressed workpiece X is removed from the punch 82. In Fig. 10, a valve (not shown) provided in an oil passage connected to the third pressure chamber 68 through the oil port 64a is closed, and thereafter, the pressurized oil is introduced in the second pressure chamber 67 through the oil passage 75. As a result, the introduction of the pressurized oil in the second pressure chamber 67 causes only the first piston 70 to move upward in Fig. 10 without moving the second piston 80 since the pressure in the third pressure chamber 68 is kept constant by the closure of the valve.

During the upward movement of the first piston 70, the pressurized oil in the first pressure chamber 66 is discharged therefrom through the oil port 63a.

Consequently, the pressed workpiece X is removed from the punch 82 by the upward movement of the first piston 70.

As can be seen from the foregoing, according to the present invention, since a plurality of successive operations can be carried out by a simple single actuator, the actuator not only requires a reduced installation space and a less energy consumption, but also makes it possible to realize an automated simple manufacturing line including an automatic conveyance of the workpieces.

Furthermore, the provision of a plurality of piston rods prevents occurrence of an eccentric load applied to the die and accordingly the workpiece, thus resulting in a high precision pressing.

## Claims

1. A hydraulic actuator comprising a single cylinder body (21; 61) which defines therein a pressure chamber (26, 27, 28; 66, 67, 68) in which a first piston (30; 70) with a first piston rod (31; 71) and a second piston (40; 80) with a second piston rod (41; 81) are independently movably inserted, a first working member (32; 72) secured to the first piston rod (31; 71), a second working member (42; 82) secured to the second piston rod (41; 81) and pressurized fluid inlet and outlet ports (23a, 24a; 63a, 64a) provided in the cylinder body (21; 61) to be connected to the pressure chamber (26, 27, 28; 66, 67, 68) wherein said pressure chamber comprises first, second and third separate pressure chambers (26, 27, 28; 66, 67, 68), so that the first and second pressure chambers (26, 27; 66, 67) are separated by the first piston (30; 70), and the second and third pressure chambers (27, 28; 67, 68) are separated by the second piston (40; 80), and further comprising a fluid pipe (35; 75) which extends through the first piston (30; 70) to be connected to the second pressure chamber (27; 67)
**characterized** in that
said first piston rod (31; 71) is comprised of a plurality of first rod elements surrounding a central element, and said second piston rod (41; 81) is comprised of a plurality of second rod elements.

2. A hydraulic actuator according to claim 1, wherein said central element is a central column (22) of the cylinder body (21), so that the pressure chamber (26, 27, 28) is annular in cross section, or wherein said central element is a central rod element of said first piston rod (71).

3. A hydraulic actuator according to claim 1 or 2, wherein said first rod elements surrounding the central element are spaced at an equiangular distance along a first imaginary circle.

4. A hydraulic actuator according to one of the claims 1 - 3, wherein said second rod elements are spaced at an equiangular distance along a second imaginary circle.

5. A hydraulic actuator according to claim 4, wherein said first rod elements are surrounded by the second rod elements as viewed in a plan view.

## Patentansprüche

1. Hydraulisches Stellglied, bestehend aus einem einzelnen Zylinderkörper (21; 61), der darin eine Druckkammer (26, 27, 28; 66, 67,68) bestimmt, in der ein erster Kolben (30; 70) mit einer ersten Kolbenstange (31; 71) und ein zweiter Kolben (40; 80) mit einer zweiten Kolbenstange (41; 81) voneinander unabhängig beweglich eingesetzt sind, einem ersten Arbeitselement (32; 72), das auf der ersten Kolbenstange (31; 71) befestigt ist, und einem zweiten Arbeitselement (42; 82), das auf der zweiten Kolbenstange (41;81) befestigt ist und Druckfluid-Einlaß- und Auslaßöffnungen (23a, 24a; 63a, 64a) hat, die im Zylinderkörper (21; 61) vorgesehen sind und eine Verbindung zur Druckkammer (26, 27, 28; 66, 67, 68) herstellen, wobei die Druckkammer eine erste, zweite und dritte separate Druckkammer (26, 27, 28; 66, 67, 68) enthält, so daß die erste und zweite Druckkammer (26, 27; 66, 67) durch den ersten Kolben (30; 70) getrennt sind, und die zweite und dritte Druckkammer (27, 28; 67, 68) durch den zweiten Kolben (40; 80) getrennt sind, und außerdem einer Fluidleitung (35; 75), die sich durch den ersten Kolben (30; 70) erstreckt und mit der zweiten Druckkammer (27; 67) verbunden ist,
**dadurch gekennzeichnet, daß**
die erste Kolbenstange (31; 71) aus einer Mehrzahl erster Stangenelemente besteht, die ein zentrales Element umgeben, und die zweite Kolbenstange (41; 81) aus einer Mehrzahl zweiter Stangenelemente besteht.

2. Hydraulisches Stellglied nach Anspruch 1, wobei das zentrale Element eine Mittelsaule (22) des Zylinders (21) ist, so daß die Druckkammer (26, 27, 28) einen ringförmigen Querschnitt hat, oder das zentrale Element ein zentrales Stangenelement der ersten Kolbenstange (71) ist.

3. Hydraulisches Stellglied nach Anspruch 1 oder 2, wobei die ersten Stangenelemente das zentrale Element umgeben und gleichwinklig entlang eines ersten imaginären Kreises beabstandet sind.

4. Hydraulisches Stellglied nach einem der Ansprüche 1 bis 3, wobei die zweiten Stangenelemente gleichwinklig entlang eines zweiten imaginären Kreises beabstandet sind.

5. Hydraulisches Stellglied nach Anspruch 4, wobei die ersten Stangenelemente von den zweiten Stangenelementen umgeben sind, wie in der Aufsicht zu sehen.

## Revendications

1. Vérin hydraulique comprenant un seul corps cylindrique (21; 61) qui définit intérieurement une chambre de pression (26, 27, 28,; 66, 67, 68) dans laquelle un premier piston (30; 70) muni d'une tige (31; 71) de premier piston et un second piston muni d'une tige (41; 81) de second piston sont insérés de façon à se déplacer de façon indépendante, un premier organe de travail (32; 72) fixé à la tige (31; 71) de premier piston, un second organe de travail (42; 82) fixé à la tige (41; 81) de second piston et des orifices (23a, 24a; 63a, 64a) d'entrée et de sortie de fluide sous pression formés dans le corps cylindrique (21; 61) pour être raccordés à la chambre de pression (26, 27, 28; 66, 67, 68), ladite chambre de pression comprenant des première, deuxième et troisième chambres de pression séparées (26, 27, 28; 66, 67, 68) de telle sorte que les première et deuxième chambres de pression (26, 27; 66, 67) soient séparées par le premier piston (30; 70) et que les deuxième et troisième chambre de pression (27, 28; 67, 68) soient séparées par le second piston (40; 80,) et comprenant, en outre, un conduit (35; 75) de fluide qui s'étend à travers le premier piston (30; 70) pour être raccordé à la deuxième chambre de pression (27; 67), caractérisé en ce que ladite tige (31; 71) de premier piston est constituée d'une pluralité de premiers éléments de tige entourant un élément central, et ladite tige (41; 81) de second piston est constituée d'une pluralité de second éléments.

2. Vérin hydraulique selon la revendication 1, dans lequel ledit élément central est une colonne centrale (22) du corps cylindrique (21) de sorte que la chambre de pression (26, 27, 28) a une section annulaire ou dans lequel ledit élément central est un élément de tige central de ladite tige (71) de premier piston.

3. Vérin hydraulique selon la revendication 1 ou 2, dans lequel lesdits premiers éléments de tige entourant l'élément central sont espacés d'une même distance angulaire le long d'une premier cercle imaginaire.

4. Vérin hydraulique selon l'une des revendications 1 à 3, dans lequel lesdits seconds éléments de tige sont espacés d'une même distance angulaire le long d'un second cercle imaginaire.

5. Vérin selon la revendications 4, dans lequel lesdits premiers éléments de tige, vus en plan, sont entourés par les seconds éléments de tige.
